Europäisches Patentamt

European Patent Office

Office européen des brevets

(11) Publication number: **0 082 115**
A2

(12) **EUROPEAN PATENT APPLICATION**

(21) Application number: 82810529.6

(51) Int. Cl.³: **G 03 C 1/733**, G 02 B 5/23

(22) Date of filing: **06.12.82**

(30) Priority: **10.12.81 GB 8137236**

(43) Date of publication of application: **22.06.83**
**Bulletin 83/25**

(84) Designated Contracting States: **CH DE FR GB LI**

(71) Applicant: **CIBA-GEIGY AG, Patentabteilung Postfach, CH-4002 Basel (CH)**

(72) Inventor: **Postle, Stephen Roderick, Dr., 29 Goodwood Avenue Hutton, Brentwood, Essex CM13 1QD (GB)**
Inventor: **Shennan, Christopher David, 191 Crescent Road, Brentwood Essex, CM14 5JB (GB)**
Inventor: **Kingston, Samuel Barry, 32 Barn Mead, Doddinghurst Essex (GB)**

(54) Photochromic assembly.

(57) A photochromic assembly which comprises coated on a self-supporting flexible plastics material sheet a binder layer having dispersed therein photochromic glass beads, the refractive indexes of the binder and said beads being essentially the same.
The assembly can be used as a window covering for green houses e.g., to control u.v.-radiation and glare.

EP 0 082 115 A2

8-13702/+

## Photochromic Assembly

This invention relates to a flexible photochromic assembly.

Photochromic glass is well known material which darkens when exposed
to light but lightens again when the strength of the light is
diminished. This material is of particular use in sun glasses but in
general because of its cost it has not found wide use as window glass.

Photochromic glass as used in sun glasses comprises sheet glass in
which is dispersed a photochromic system. The most usual photochromic
system is silver halide but other useful halides in this respect are
copper halide and cadmium halide. Certain organic chemicals are known
for example spiropyran derivatives but these do not seem to have found
use in photochromic glass.

We have found sheet photochromic material which is thinner and more
flexible than the previously known sheets of photochromic glass.

According to the present invention there is provided a photochromic
assembly which comprises a self supporting flexible plastics material
sheet coated with a colloid binder which has dispersed therein from
10 % to 40 % by weight of the binder photochromic glass beads from
0.05 to 50 μm in size, the refractive indexes of the binder and the
photochromic beads being substantially the same.

Other objects of the present invention are a process for the preparation of a photochromic assembly and the use of this assembly as a
window covering for example.

A particularly useful colloid binder is gelatin which has a refractive index of 1.505 to 1.535. This matches the refractive index of photochromic glass beads prepared by grinding up a sheet of photochromic glass. These glass beads have a refractive index of 1.523.

Another useful colloid binder is polyvinyl alcohol which when dried has a refractive index of 1.49 to 1.53. Polyvinyl alcohol is of especial use because it may be added to the dispersion of glass beads during the process for preparing the glass beads by grinding. The dispersion medium containing the glass beads and the polyvinyl alcohol may be coated directly on to plastics sheet material.

Preferred flexible plastics material sheets are those used as photographic film base. Examples of plastics material used as film base include cellulose triacetate, cellulose acetate-butyrate and biaxially oriented polyethylene terephthalate, polycarbonate and polystyrene. To enable a hydropholic colloid such as gelatine to adhere to biaxially oriented polystyrene, polyethylene terephthalate and polycarbonate the surface of these plastics material usually require to be treated and a subbing layer coated therein.

Other suitable plastics material, for use as the flexible sheet include polypropylene, polyvinylchloride and polyamide.

Preferably there is coated on the surface of the binder which comprises the photochromic glass beads a thin protective layer for example a gelatin or polyvinyl alcohol or methyl cellulose layer.

Optionally there may be coated on the reverse side of the flexible sheet an adhesive layer. Suitable adhesive layers are solvent-based adhesive layers for example polyacrylate or polybutadiene layers. However water-based adhesives such as starch, silicates can also be used. To get such layers to adhere to the flexible sheet surface treatment of the sheet and/or a subbing layer may be required as described above for some of the plastics material. Alternatively a charged layer may be coated on the reverse side of the flexible sheet, for example gelatin and an ionic wetting agent, which layer has been treated with a corona discharge. Charged layers of this type strongly retain an electrostatic charge and can be firmly adfixed to a flat surface for example to a plate glass surface.

The glass beads preferably contain as the photochromic system a metal halide and especially silver halide. Silver bromide is especially preferred. The glass beads may be prepared by grinding up photochromic glass sheets of the type described for example in US 3,208,860 and GB 1,111,977; 1,410,203; 1,428,736; 1,498,769; 1,505,100 and 1,518,497.

There may be present in the binder of the assembly dyes optical brighteners, anti-oxidants, light stabilisers, u.v.-absorbers, i.r.- absorbers and binder modifiers such as latexes and hardeners. Further the surface of the assembly may be treated with an antiblock substance or a surfactant. The surface may be protected by a further layer of colloid material, or a laminate for example a polyethylene laminate.

The photochromic assembly of the present invention may exhibit slow photochemical reversal allowing non-destructive read-out at wavelengths below 600nm.

When the proportion of photochromic material present in the binder is from 10 to 20 % by weight of the binder the layer is light transparent. When however the proportion of photochromic material is from 20 to 40 % and especially from 30 to 40 % by weight the layer is opaque.

The uses of the assembly of the invention are as follows:

1) For an opaque or semi-opaque assembly: temporary reusable print material for use in microplanning, microfilm copying, graphic arts material where the copy can be examined and information extracted. A permanent copy then can be made in a normal photographic way from a
negative, or the temporary print may be copied e.g. xerographically.

2) For a transparent or translucent assembly: (a) Window covering especially
with adhesive or electrostatic backing, for office and domestic
windows, car windscreens, spectacle coverings, greenhouses, to control
u.v.—radiation and glare. (b) Masking material to enhance print
contrast when used as in US 4,021,191 or as in Phot.Sci.Eng. 1965,
Vol. 9, 67-71, or by carrying a preformed and semi-stable image, as a contrast
reducing aid in a positive-positive print system for example a silver
dye bleach system. (c) Reversable microfilm or similar film, for
recording CRO (cathode ray oscillascope) output or COM (computer) output where permanent storage of such output may not be vital: a copy
of the data stored on the temporary film would then be available for
permanent copying onto another film.

The following example will serve to illustrate the invention.

Example 1:   32 g of a lump of photochromic glass containing silver
bromide as the photochromic system (prepared according to GB
1,111,977) is dry ground in a pestle and mortar, until the majority
can be sieved through a 2mm mesh. In this way 30 g of the glass
powder is sieved into a 250 ml stainless steel pot which is filled
to 75 % of its volume with 10 mm stainless steel balls, sealed, and
rolled on a roller mill for 10 hours. The powdered glass is then
washed off the balls with 60 ml of water which contains the sodium
salt of an alkyl naphthalene sulphonate as the wetting agent at 0.1 %
concentration. Further water is added to give a total weight dispersion
of 100 g. This is milled in a bead mill (Dyno Mill: Glen Creston)
using 1.0 to 1.5 mm glass beads at a rate of 3000 r.p.m. for 2 hours.
This gives a dispersion of mean particle size 2 μm and a polydisper-
sity of 4 (as measured on a Nanosizer: Coulter Instruments) and containing 30 % solids. This is prepared for coating by the addition of an aqueous gelatin solution to give a dispersion containing 1 % gelatin.

10 g of this dispersion is melted out at 45°C and to it is added the wetting agent used above (5 %; 0.5 ml). The mixture is filtered through muslin, and coated on to subbed cellulose acetate film (125 µm thickness) attached to a 2.4 dm$^2$ glass plate. When dry, the cellulose acetate strip is removed, and its photochromicity demonstrated thus. A strip of film is cut, half covered with an opaque material and the whole exposed for 360 seconds to a 30 watt u.v.-lamp emitting light of wavelength 366 nm. The portion of the strip not covered by the opaque material is noticeably darker than that part of the strip which is covered up. On leaving under ambient daylight conditions the strip adopts a uniform density, thus demonstrating the reversibility of the system. The strip can be exposed to highly condensed light, giving a darkening of hue, and then allowed to fade, any number of times.

Example 2: As in Example 1 32 g of a lump of photochromic glass (prepared according to GB 1,111,977) is dry ground in a pestle and mortar, until the majority can be sieved through a 2 mm mesh. In this way 30 g of the glass powder is sieved into a 250 ml stainless steel pot which is filled to 75 % of its volume with 10 mm stainless steel balls, sealed, and rolled on a roller mill for 10 hours. The powdered glass is then washed off the balls with 40 ml of water which contained the sodium salt of an alkyl naphthalene sulphonate as the wetting agent at 0.1 % concentration. A 20 % aqueous solution of low viscosity polyvinyl alcohol is added to give a total weight dispersion of 100 g. This is milled in a bead mill (Dyno Mill: Glen Creston) using 1.0 to 1.5 mm glass beads at a rate of 3000 rpm for 2 hours. This gives a dispersion of mean particle size of 0.2 µm, and a polydispersity of 4.

To this dispersion is added 50 ml of a 5 % of the alkyl naphthalene sulphonate wetting agent as used above. The dispersion is filtered through muslin to remove the grinding beads to yield a dispersion having as solids 20 % by weight of the photochromic glass beads and 4 % by weight of the polyvinyl alcohol. 10 g of this dispersion are then coated on to subbed cellulose acetate film (125 µm thickness). When dry, the coated cellulose acetate strip is removed and its photo-chromaticity demonstrated as in Example 1.

Example 3: 16 g of a lump of glass (prepared as described in GB 1,111,977) is dry ground by use of pestle and mortar until the majority of it can be sieved through a 2 mm mesh.

15 g of this photochromic glass is dispersed in water with 0.5 g deionised blend gelatin, 2.0 g of an alkyl sulphate wetting agent and 1 g of a polyethylene oxide wetting agent. The total weight of the dispersion is then made up to 100 g with water. The dispersion is then milled in a bead mill (Dyno Mill) for 4 hours. The mean particle size of the photochromic glass after milling is 0.63 µm with a polydispersity of 4 to 5 (as measured on the Coulter Nanosizer). After milling further deionised blend gelatine solution is added to the dispersion giving a final dispersion containing 5.25 g of photochromic glass 4.5 g of deionised blend gelation, 0.7 g of alkyl sulphate wetting agent, 0.35 g of polyethylene oxide wetting agent, 0.025 g of p-chloro — m-cresol and water to make 100 g.

This solution is maintained at 40°C. 5 ml of a 1 % aqueous formaldehyde solution is added, and the mixture immediately coated onto subbed polyester film base to give a coating of 25mg/dm$^2$ photochromic glass and 21 ml/dm$^2$ gelatin.

Strips of this coating are tested as in Example 1 with the same results.

Claims:

1. A photochromic assembly which comprises a self supporting flexible plastics material sheet coated with a colloid binder which has dispersed therein from 10 % to 40 % by weight of the binder photochromic glass beads from 0.05 to 50 µm in size, the refractive indexes of the binder and the photochromic beads being substantially the same.

2. A photochromic assembly according to claim 1 wherein the colloid binder is gelatin.

3. A photochromic assembly according to claim 1 wherein the colloid binder is polyvinyl alcohol.

4. A photochromic assembly according to claim 1 wherein the photochromic glass beads contain silver halide as the photochromic system.

5. A photochromic assembly according to claim 4 wherein the photochromic glass beads contain silver bromide as the photochromic system.

6. A photochromic assembly according to claim 1 wherein the self-supporting flexible plastics material sheet is of the type used as a photographic film base.

7. A photochromic assembly according to claim 4 wherein the sheet is composed of cellulose triacetate, cellulose acetatebutyrate or biaxially oriented polyethylene terephthalate, polycarbonate or polystyrene.

8. A photochromic assembly according to claim 1 wherein there is coated on the surface of the binder which comprises the photochromic glass beads a protective layer.

9. A photochromic assembly according to claim 1 wherein there is coated on the reverse side of the flexible sheet an adhesive layer.

10. A photochromic assembly according to claim 1 wherein there is coated on the reverse side of the flexible sheet a charged layer.

11. A photochromic assembly according to claim 10 wherein the charged layer contains gelatin and an anionic wetting agent.

12. A process for the preparation of a photochromic assembly according to claim 1 which comprises rough grinding a lump of photochromic glass to a glass powder, milling the glass powder in the presence of a wetting agent to yield particles of from 0.05 to 50 $\mu$m in size, adding the particles to an aqueous colloid binder coating solution, coating the coating solution on to a self-supporting flexible plastics sheed material and drying the coating.

13. A process according to claim 12 wherein the colloid binder is gelatin.

14. A process for the preparation of a photochromic assembly according to claim 3 which comprises rough grinding a lump of photochromic glass to a glass powder, milling the glass powder in the presence of a wetting agent and during the final stages of milling adding a solution of polyvinyl alcohol, continuing the milling to yield particles of photochromic glass of from 0.05 to 50 $\mu$m in size, coating the glass particle dispersion containing the polyvinyl alcohol on to a self-supporting flexible sheet material and drying the coating.

15. The use of a photochromic assembly according to claim 1 as a window covering, as contrast reducing aid in a photographic print system, as reversible microfilm or as temporary reversible print material.